# EUROPEAN PATENT APPLICATION

(11) **EP 2 184 635 A1**
(43) Date of publication of application: **12.05.2010**
(21) Application number: 09175695.7
(22) Date of filing: 11.11.2009
(51) Int. Cl.: G02F 1/13357, H01J 63/06

(54) **Backlight unit with integral wire grid polarizer**

(30) Priority: 11.11.2008 KR 20080111873
(71) Applicant: Samsung SDI Co., Ltd., Gyeonggi-do (KR)
(72) Inventor: Lee, Byong-Gon, Yongin-si Gyeonggi-do (KR)
(74) Representative: Walaski, Jan Filip

(57) **Abstract**

A backlight unit (100) functions as a surface light source of a non-emissive display device (200). The backlight unit (100) includes an integral wire grid polarizer (180).

## Description

The present invention relates to a backlight unit, and more particularly, to a backlight unit having improved luminous efficiency.

In general, electron emission devices may be classified as either a type which uses a hot cathode as an electron emission source or a type which uses a cold cathode as an electron emission source. Field Emission Devices (FEDs), Surface Conduction Emitters (SCEs), Metal Insulator Metals (MIMs), Metal Insulator Semiconductors (MISs), and Ballistic electron Surface Emitting types (BSEs), among others, are known as cold cathode type electron emission devices.

FED type electron emission devices are based on the principle that when a material having a low work function or a high beta function is used as an electron emission source, electrons are easily emitted in a vacuum due to an electric field difference. The following types of FED type electron emission devices have been developed: ones which employ a tapered tip structure formed of, for example, molybdenum (Mo) or silicon (Si) as a main component, ones which employ a carbonaceous material such as graphite or Diamond-Like Carbon (DLC), and ones which employ a nano material such as nanotubes or nanowires, as electron emission sources.

FED type electron emission devices may be largely classified as either top gate type or under gate type, according to an arrangement of a cathode electrode and a gate electrode. FED type electron emission devices may also be classified as diode type, triode type, or tetrode type according to the total number of electrodes used. In such a conventional electron emission device, electrons are emitted from an electron emission source due to an electric field formed between a cathode electrode and a gate electrode. That is, electrons are emitted from the electron emission source disposed around one of a cathode electrode and a gate electrode, which operates as a cathode. The emitted electrons travel toward the other of the cathode electrode and the gate electrode, which operates as an anode, in a beginning stage, and are then accelerated toward a phosphor layer due to a strong electric field of an anode electrode.

In general, a backlight unit, which is a type of electron emission device, includes a polarizer. The polarizer is a type of device which obtains linear polarized light based on the principle that the color of transmitted polarized light varies according to the location of an optical isomer. In general, the transmissivity of non-polarized light that is primarily incident on a polarizer is about 30 to 40 percent (%) and the remaining roughly 60 percent (%) of the non-polarized light is absorbed or reflected by the polarizer. Absorption or reflection of light by the polarizer is a main factor of degradation of luminous efficiency of a backlight.

In order to solve such a problem, various methods of using a wire grid polarizer have been introduced. The wire grid polarizer is formed by performing line patterning on a conductor in order to divide the conductor into regions having dimensions similar to a wavelength of light of a region of interest, so that electric-field oscillating components that intersect a grid may pass through the grid, but the energy of electric-field oscillating components that are not correctly aligned with respect to the grid is partially absorbed or reflected by the grid.

The wire grid polarizer has an advantage in that an optical reproducing efficiency is high since internal absorption is less than in a conventional polarizer, and the transmissivity of selectively transmitted polarized light and the rate of back reflection of non-selected polarized light are higher than in a conventional polarizer. In this case, conversion of polarized light, such as oval polarized light, should be performed in order to reuse light reflected in a rear surface.

In a conventional backlight unit, a diffusion sheet is disposed between an optical source and a wire grid polarizer, and thus, light reflected on a rear surface in an optical path passes through the diffusion sheet two or more times, thereby causing an optical loss.

Even if the wire grid polarizer is disposed between the optical source and the diffusion sheet, the wire grid polarizer and the optical source are installed to be separated from each other. Thus an optical loss occurs in a space between the wire grid polarizer and the optical source.

Also, an increase in the optical diffusion performance of the diffusion sheet results in a reduction in the transmissivity of light, and therefore, the diffusion sheet itself causes an optical loss.

Furthermore, in an electron emission type backlight unit, since voltage is applied to an anode surface, static electricity is induced onto an external surface of a substrate. The induced static electricity is one of a number of factors that cause a device to operate unstably, and may cause unnecessary particles, such as dust, to stick to an external surface of the backlight unit.

Exemplary embodiments of the present invention provide a backlight unit having improved luminous efficiency.

According to the present invention, there is provided a backlight unit for a non-emissive display device, the backlight unit having an integral wire grid polarizer.

Other features of the invention are claimed in the dependent claims.

The above and other features and aspects of the present invention will become more apparent by describing in detail exemplary embodiments thereof, with reference to the attached drawings, in which:
FIG. 1 is a partial perspective view of an electron emission type backlight unit according to an embodiment of the present invention;
FIG. 2 is a cross-sectional view of FIG. 1 taken along the line II-II;
FIG. 3 is a cross-sectional view of an electron emission type backlight unit according to another embodiment of the present invention;
FIG. 4 is a cross-sectional view of an electron emission type backlight unit according to another embodiment of the present invention; and
FIG. 5 is a cross-sectional view of an electron emission type backlight unit according to another embodiment of the present invention.

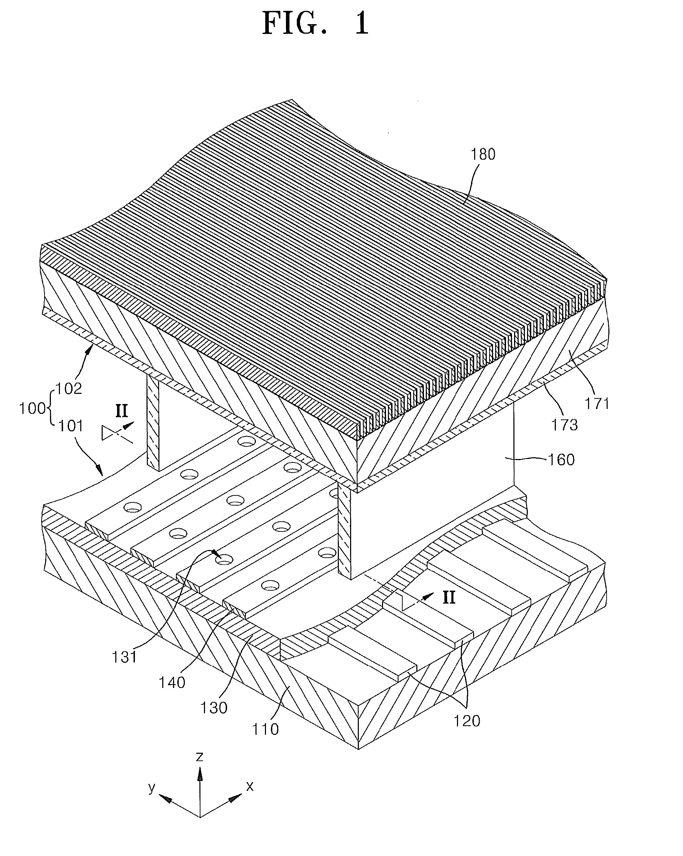

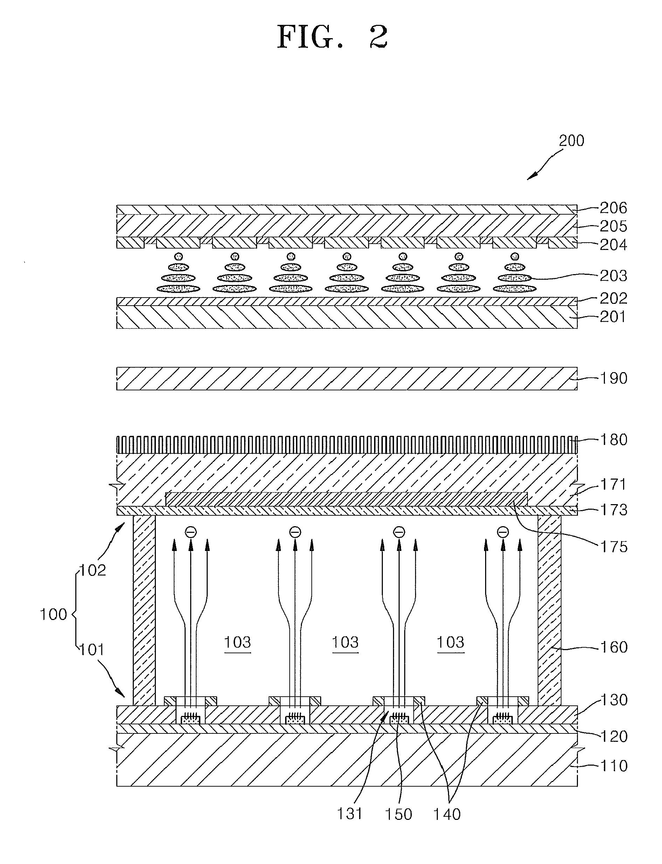

FIG. 1 is a partial perspective view of an election emission type backlight unit 100 including an electron emission device 101 according to an embodiment of the present invention. FIG. 2 is a cross-sectional view of FIG. 1 taken along the line II-II. A diffusion sheet 190 and a liquid crystal display (LCD) panel 200 illustrated in FIG. 2 are not illustrated in FIG. 1.

As illustrated in FIGS. 1 and 2, the backlight unit 100 includes the electron emission device 101 and a front panel 102 that are aligned in parallel to form a light emitting space 103, which is a vacuum space, and spacers 160 disposed to maintain a distance between the electron emission device 101 and the front panel 102.

The electron emission device 101 includes a first substrate 110, a plurality of first electrodes 120, an insulating layer 130, a plurality of second electrodes 140, and a plurality of electron emission sources 150.

Here, the first electrodes 120 and the second electrodes 140 are arranged to cross one another on the first substrate 110. The insulating layer 130 is formed between the first and second electrodes 120 and 140 in order to electrically insulate the first and second electrodes 120 and 140 from each other. A plurality of electron emission holes 131 are respectively formed on locations where the first and second electrodes 120 and 140 cross each other. The electron emission sources 150 are respectively included in the electron emission holes 131.

The first substrate 110 is a plate having a thickness (e.g., a predetermined thickness), and may be formed of quartz glass, glass containing an amount of impurities (e.g., Na), plate glass, a glass substrate coated with SiO2, or an aluminum oxide or ceramic substrate. In embodiments having a flexible display apparatus, the first substrate 110 may be formed of a flexible material.

The first and second electrodes 120 and 140 may be formed of an electrically conductive material that is well known in the art. For example, the first and second electrodes 120 and 140 may be formed of metals such as Al, Ti, Cr, Ni, Au, Ag, Mo, W, Pt, Cu, or Pd, or an alloy thereof. The first and second electrodes 120 and 140 may also be formed of a printed conductor including glass and a metal such as Pd, Ag, RuO₂, or Pd-Ag, or a metal oxide thereof. The first and second electrodes 120 and 140 may also be formed of a transparent conductor such as In₂O₃ or SnO₂, or a semiconductor material such as polysilicon.

The insulating layer 130 insulates the first and second electrodes 120 and 140. The insulating layer 130 may be formed of a general insulating layer. For example, the insulating material may be a silicon oxide, a silicon nitride, frit, or a similar material. Examples of the frit include, but are not limited to, PbO-SiO₂-based frit, PbO-B₂O₃-SiO₂-bascd frit, ZnO-SiO₂-based frit, ZnO-B₂O₃-SiO₂-based frit, Bi₂O₃-SiO₂-based frit, and Bi₂O₃-B₂O₃-SiO₂-based frit.

The electron emission sources 150 contain an electron emission material. The electron emission material may be a carbon nanotube (CNT) that has a low work function and a high beta function. In particular, the carbon nanotube has good electron emission characteristics, thus enabling a low voltage operation. Thus, an apparatus using a carbon nanotube as an electron emission source may be easily manufactured on a large scale. However, the electron emission material is not limited to a carbon nanotube, and may be, for example, a carbonaceous material such as graphite, diamond, or diamond-like carbon, or a nano material such as nanotube, nanowire, or nanorod. The electron emission material may also include a carbide-derived carbon.

The front panel 102 includes a second substrate 171 which may be transparent, a phosphor layer 175 which is disposed on the second substrate 171 and which is excited by electrons emitted from the electron emission device 101 for emitting visible light, a third electrode 173 which accelerates the electrons emitted from the electron emission device 101 toward the phosphor layer 175, and a wire grid polarizer 180.

The second substrate 171 may be formed of the same material as the first substrate 110 and may be transparent.

The third electrode 173 may be formed of the same material as the first or second electrodes 120 or 140. That is, the third electrode 173 may be formed of a metal such as Al, Ti, Cr, Ni, Au, Ag, Mo, W, Pt, Cu, or Pd, or an alloy thereof; a printed conductor including glass and a metal such as Pd, Ag, RuO₂, or Pd-Ag or a metal oxide thereof; a transparent conductor such as In₂O₃ or SnO₂; or a semiconductor material such as polysilicon. Preferably, the third electrode 173 may be formed of an Al thin film. If the third electrode 173 is formed of an Al thin film, accelerated electrons may pass through the third electrode 173 to reach the phosphor layer 175. The third electrode 173 may also function as a reflection plate. That is, the third electrode 173 may function as a reflection plate that reflects light reflected from a rear surface of the wire grid polarizer 180. The relationship between the third electrode 173 as a reflection plate and the wire grid polarizer 180 is described in detail later.

The phosphor layer 175 may be formed of a cathode luminescence (CL) type phosphor which is excited by accelerated electrons to emit visible light. A phosphor that may be used in the phosphor layer 175 may be a red-emitting phosphor such as SrTiO₃:Pr, Y₂O₃:Eu, or Y₂O₃S:Eu, a green-emitting phosphor such as Zn(Ga, Al)₂O₄:Mn, Y₃(Al, Ga)₅O₁₂:Tb, Y₂SiO₅:Tb, or ZnS:Cu,Al, or a blue-emitting phosphor such as Y₂SiO₅:Ce, ZnGa₂O₄, or ZnS:Ag,Cl. Of course, the present invention is not limited to the above phosphors.

The wire grid polarizer 180 is disposed on the second substrate 171, i.e., on, or attached to, a surface of the second substrate 171 which faces the diffusion sheet 190 and the LCD panel 200. The wire grid polarizer 180 will be described in detail later.

In order to normally operate the backlight unit 100, a space between the phosphor layer 175 and the electron emission device 101 must be maintained in a vacuum state. For this, the spacers 160 maintaining a distance between the phosphor layer 175 and the electron emission device 101, and glass frit (not shown) for sealing the vacuum space between the phosphor layer 175 and the electron emission device 101, may be further used. The glass frit is provided around the vacuum space to seal the vacuum space.

The diffusion sheet 190 is disposed on the backlight unit 100, and particularly, on the wire grid polarizer 180, and the LCD panel 200 is disposed on the diffusion sheet 190.

The diffusion sheet 190 is disposed on the backlight unit 100 to scatter light emitted from the backlight unit 100.

The LCD panel 200 includes an upper substrate 205 and a lower substrate 201 that face each other, a thin film transistor (TFT) array 202, liquid crystal 203 and a color filter 204 which are disposed between the upper and lower substrates 205 and 201, and a polarizer 206 disposed on the upper substrate 205. The LCD panel 200 is well known in the art and thus will not be described in detail here.

The backlight unit 100 operates as follows. When a negative (-) voltage and a positive (+) voltage are respectively applied to the first electrodes 120 and the second electrodes 140 of the electron emission device 101, electrons are emitted from the electron emission sources 150 toward the second electrode 140 due to an electric field formed between the first and second electrodes 120 and 140. At this time, when a positive (+) voltage which is much higher than the positive (+) voltage applied to the second electrodes 140 is applied to the third electrode 173, the electrons emitted from the electron emission sources 150 are accelerated toward the third electrode 173. The electrons excite the phosphor layer 175 adjacent to the third electrode 173 to emit visible light. The emission of the electrons may be controlled by the voltage applied to the second electrodes 140.

In some embodiments, a negative (-) voltage is not necessarily applied to the first electrodes 120 provided that an appropriate electric potential necessary for electron emission is formed between the first and second electrodes 120 and 140.

The backlight unit illustrated in FIGS. 1 and 2 is a surface light source and may be used as a backlight unit of a non-emissive display device such as a TFT-LCD. Furthermore, in order to display images instead of simply emitting a visible ray from a surface light source, or in order to use a backlight unit having a dimming function, the first and second electrodes 120 and 140 of the electron emission device 101 may be arranged to cross each other. For this, one of the first and second electrodes 120 and 140 may be formed to have a main electrode part and a branch electrode part. In some embodiments, the main electrode part intersects the other electrode of the first and second electrodes 120 and 140, and the branch electrode part protrudes from the main electrode part to face the other electrode. The electron emission sources 150 may be formed on the branch electrode part or a part facing the branch electrode part.

The wire grid polarizer 180 of the backlight unit 100 according to the current embodiment will now be described in greater detail.

As described above, the wire grid polarizer 180 is formed by performing line patterning on a conductor in order to divide the conductor into regions having dimensions similar to a wavelength of light of a region of interest, so that electric-field oscillating components that intersect the grid may pass through the grid, but the energy of electric-field oscillating components that are not correctly aligned with respect to the grid is partially absorbed or reflected by the grid.

More specifically, when non-polarized light is incident on the wire grid polarizer 180, all electric field vectors in a certain direction are reflected by a medium and other electric field oscillating components penetrate the medium. That is, when non-polarized light is incident on the wire grid polarizer 180, all polarized light having electric-field components parallel to a metal wire is reflected, and polarized light of electric-field components perpendicular to the grid passes through the medium. Thus, current induced by the electric-field components parallel to the metal wire flows through the metal wire to scatter polarized energy that is in the same direction. Accordingly, linear polarized light may be generated by reflecting the polarized light in a direction parallel to the metal wire.

Here, the wire grid polarizer 180 reflects beams polarized in a direction parallel to the wire grid polarizer 180 and allows beams polarized in a direction perpendicular to the wire grid polarizer 180 to pass through from among diffused-polarized beams emitted from the phosphor layer 175. The wire grid polarizer 180 is formed of devices or materials that may be divided into an S-polarizer and a P-polarizer to transmit or reflect light. The wire grid polarizer 180 may be manufactured using a metal material according to a combination of a lift-off method and one of a hologram lithography method and an e-beam lithography method. Also, a cycle of the wire grid polarizer 180 is not limited and may range from several nm to several µm. The efficiency and characteristics of the wire grid polarizer 180 may vary according to a line-width, cycle and thickness thereof. In one embodiment, a pattern dimension of the wire grid polarizer 180 of the backlight unit 100 is less than or equal to 1 µm, and the distance between patterns of the wire grid polarizer 180 is also less than or equal to 1 µm.

In the backlight unit 100 according to the current embodiment, the wire grid polarizer 180 is formed on the second substrate 171.

More specifically, conventionally, since a diffusion sheet is installed between an optical source and a wire grid polarizer, reflected light may pass through the diffusion sheet two or more times, thereby causing an optical loss. Even if the wire grid polarizer is installed between the optical source and the diffusion sheet, the wire grid polarizer is separated from the optical source and thus an optical loss occurs in a space between the wire grid polarizer and the optical source. An optical loss also occurs due to the diffusion sheet itself.

In the backlight unit 100 according to the current embodiment, the wire grid polarizer 180 is combined with the second substrate 171. Thus the backlight unit 100 and the wire grid polarizer 180 are combined in a single body, in other words wire grid polarizer is an integral part of the backlight unit. In this case, light emitted from the phosphor layer 175 of the backlight unit 100 is first polarized by the wire grid polarizer 180 and then passes through the diffusion sheet 190. Light reflected from a rear surface of the wire grid polarizer 180 is substantially reflected by the third electrode 173 functioning as a reflection plate, thereby changing a polarized state of the light. In the backlight unit 100 according to the current embodiment, a diffusion sheet is not included between the phosphor layer 175 and the wire grid polarizer 180, thereby improving the reproduction efficiency of light. Also, the wire grid polarizer 180 and the phosphor layer 175 are respectively disposed on both surfaces of the second substrate 171. Accordingly, an optical loss occurring in a space between the wire grid polarizer 180 and the phosphor layer 175 is reduced.

Although FIG. 2 illustrates that the diffusion sheet 190 is disposed between the backlight unit 100 and the LCD panel 200, the present invention is not limited thereto. In detail, an arrangement pitch between wire grids and the width of an aperture of each of the wire grids are designed to be equal to or less than the wavelength of a visible light region, i.e., 200 to 800 nm, in order to increase selectivity of polarized light. Light passing through the wire grid with the above dimensions contains polarized light, and is also influenced by diffraction due to multiple slits, thereby spreading out light reaching the LCD panel 200. In general, the optical transmissivity of the diffusion sheet 190 is inversely proportional to a diffusion degree thereof. Accordingly, in the backlight unit 100 according to an embodiment of the present invention, the wire grid polarizer 180 may perform a part of the function of the diffusion sheet 190 and thus is capable of increasing the optical transmissivity of the diffusion sheet 190 by reducing haze in the diffusion sheet 190. Furthermore, the wire grid polarizer 180 may also function as a diffusion sheet without having to use an additional diffusion sheet. Accordingly, a backlight unit may not include a diffusion sheet, and thus, an optical loss from a diffusion sheet may be reduced, and luminous efficiency may be increased. Also, in this case, the total number of constitutional elements in the backlight unit decreases, and a manufacturing process is simplified.

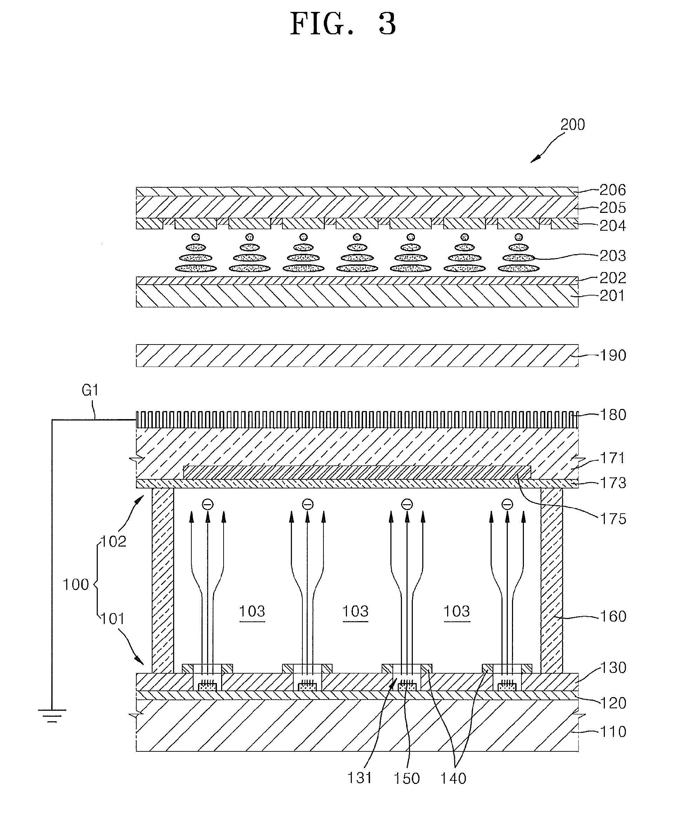

FIG. 3 is a schematic cross-sectional view of an electron emission type backlight unit 100 according to another embodiment of the present invention. Referring to FIG. 3, the backlight unit 100 includes an electron emission device 101 and a front panel 102 that form a light emitting space 103 therebetween, and spacers 160 disposed to maintain a distance between the electron emission device 101 and the front panel 102. The electron emission device 101 includes a first substrate 110, a plurality of first electrodes 120, an insulating layer 130, a plurality of second electrodes 140, and a plurality of electron emission sources 150. The front panel 102 includes a second substrate 171, a phosphor layer 175, a third electrode 173, and a wire grid polarizer 180. A diffusion sheet 190 is disposed on the backlight unit 100 and an LCD panel 200 is disposed on the diffusion sheet 190.

The current embodiment differs from the previous embodiment in that one side of the wire grid polarizer 180 is grounded. In detail, in the backlight unit 100, a voltage is applied to a surface of the third electrode 173 which is an anode, and thus, static electricity may be generated on an external surface of the second substrate 171. Static electricity is one of a number of factors that cause a device to unstably operate, and may cause unnecessary particles, such as dust, to stick to an external surface of the backlight unit 100. To reduce static electricity, one side of the wire grid polarizer 180 of the backlight unit 100 according to the current embodiment is grounded (see reference numeral G1 of FIG. 3). That is, the wire grid polarizer 180 includes a conductor, and thus, one side of the wire grid polarizer 180 is grounded, thereby reducing occurence of static electricity.

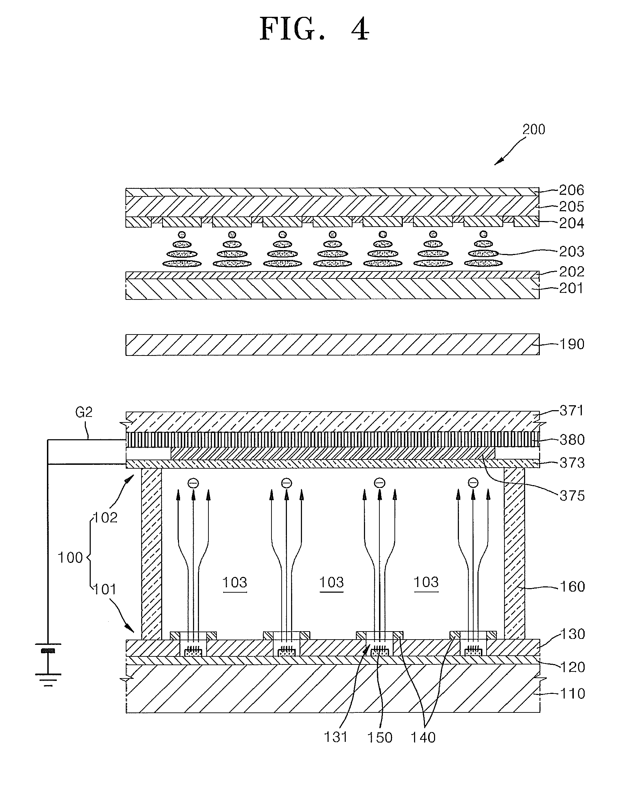

FIG. 4 is a schematic cross-sectional view of an electron emission type backlight unit 100 according to another embodiment of the present invention. Referring to FIG. 4, the backlight unit 100 includes an electron emission device 101 and a front panel 102 that form a light emitting space 103 therebetween, and spacers 160 disposed to maintain a distance between the electron emission device 101 and the front panel 102. The electron emission device 101 includes a first substrate 110, a plurality of first electrodes 120, an insulating layer 130, a plurality of second electrodes 140, and a plurality of electron emission sources 150. The front panel 102 includes a second substrate 371, a third electrode 373, a phosphor layer 375, and a wire grid polarizer 380. A diffusion sheet 190 is disposed on the backlight unit 100 and an LCD panel 200 is disposed on the diffusion sheet 190.

The current embodiment differs from the previous embodiments in that the wire grid polarizer 380 is disposed on the second substrate 371 facing the first substrate 110. More specifically, the wire grid polarizer 380, the phosphor layer 375, and the third electrode 373 are sequentially formed on the second substrate 371 facing the first substrate 110, and the wire grid polarizer 380 and the phosphor layer 375 are directly adjacent and closely adhered to each other. In the current embodiment, since the second substrate 371 is not disposed between a rear surface of the wire grid polarizer 380 and the third electrode 373, an optical loss due to reflected light passing through the second substrate 371 may be reduced. Also, the phosphor layer 375 is surrounded by the third electrode 373 and the wire grid polarizer 380 which may both include conductive materials. Thus, electrons colliding against the phosphor layer 375 are not discharged to the outside, preventing a voltage drop.

Also, in the backlight unit 100 according to the current embodiment, one side of each of the wire grid polarizer 380 and the third electrode 373 may be connected to the same potential (see reference numeral G2 of FIG. 4). That is, the wire grid polarizer 380 and the third electrode 373 include conductive materials, and thus, one side of each of the wire grid polarizer 380 and the third electrode 373 is connected to apply an appropriate voltage thereto, thereby reducing occurrence of static electricity.

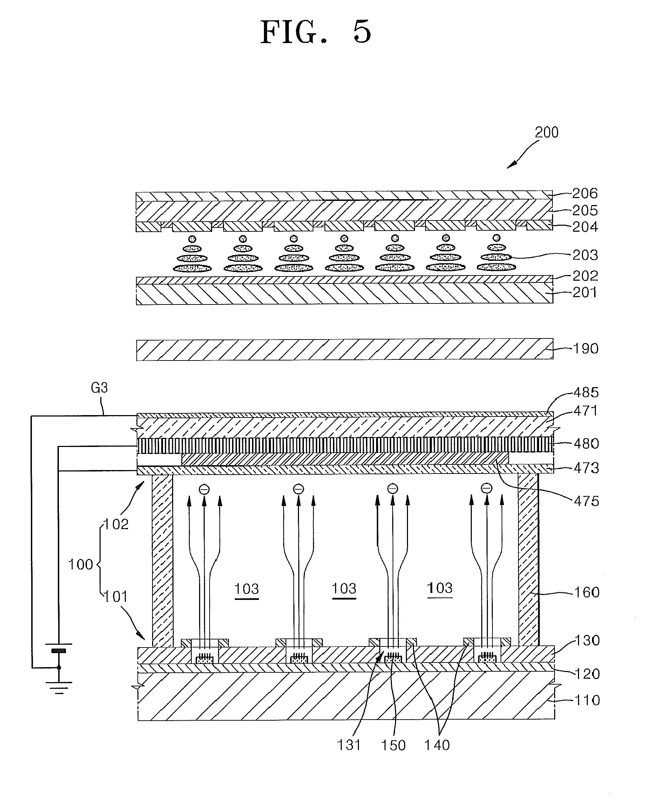

FIG. 5 is a schematic cross-sectional view of an electron emission type backlight unit 100 according to another embodiment of the present invention. Referring to FIG. 5, the backlight unit 100 includes an electron emission device 101 and a front panel 102 that form a light emitting space 103, and spacers 160 disposed to maintain a predetermined space between the electron emission device 101 and the front panel 102. The electron emission device 101 includes a first substrate 110, a plurality of first electrodes 120, an insulating layer 130, a plurality of second electrodes 140, and a plurality of electron emission sources 150. The front panel 102 includes a second substrate 471, a third electrode 473, a phosphor layer 375, and a wire grid polarizer 480. A diffusion sheet 190 is disposed on the backlight unit 100 and an LCD panel 200 is disposed on the diffusion sheet 190.

The current embodiment differs from the embodiment of FIG. 4 in that a static electricity prevention layer 485 is further disposed on the second substrate 471. In detail, the static electricity prevention layer 485 may be further formed on the second substrate 471 facing the diffusion sheet 190 and the LCD panel 200, and one side of the static electricity prevention layer 485 may further be grounded (see reference numeral G3 of FIG. 5).

The above exemplary embodiments of a backlight unit according to the present invention provide improved luminous efficiency.

While the present invention has been particularly shown and described with reference to exemplary embodiments thereof, it will be understood by those of ordinary skill in the art that various changes in form and details may be made without departing from the scope of the present invention as defined by the following claims.

## Claims

1. A backlight unit (100) for a non-emissive display device, the backlight unit having an integral wire grid polarizer (180, 380, 480).

2. The backlight unit of claim 1, further comprising a static electricity prevention layer (485).

3. The backlight unit of claim 2, wherein the static electricity prevention layer is grounded.

4. The backlight unit of claim 1, wherein the wire grid polarizer (180) is grounded.

5. The backlight unit of any one of the preceding claims, comprising:
a first substrate (110) and a second substrate (171, 371, 471) facing each other;
a plurality of first electrodes (120) on the first substrate;
a plurality of second electrodes (140) on the first substrate and electrically insulated from the first electrodes;
an electron emission source (150) on the first substrate and electrically connected to the first electrodes;
a phosphor layer (175) on the second substrate; and
a third electrode (173) on the second substrate for accelerating electrons emitted from the electron emission source (150) toward the phosphor layer;
wherein the wire grid polarizer (180, 380, 480) is arranged on the second substrate to polarize light emitted from the phosphor layer.

6. The backlight unit of claim 5, wherein the wire grid polarizer is arranged to scatter light emitted from the phosphor layer.

7. The backlight unit of claim 5 or 6, wherein the wire grid polarizer (180) is on an outer surface of the second substrate and the phosphor layer (175) is on an inner surface of the second substrate that faces the first substrate (110).

8. The backlight unit of claim 5 or 6, wherein the wire grid polarizer (380, 480) is arranged on an inner surface of the second substrate (371, 471) that faces the first substrate.

9. The backlight unit of claim 8, wherein the phosphor layer (375, 475) is on the wire grid polarizer (380, 480) and the third electrode (373, 473) is on the phosphor layer.

10. The backlight unit of claim 9, wherein the phosphor layer (375) and the wire grid polarizer (380) are directly adjacent to one another.

11. The backlight unit of claim 9 or 10, wherein the third electrode and the wire grid polarizer are connected to the same potential.

12. The backlight unit of any one of claims 5 to 11, wherein the third electrode is arranged to reflect light reflected from the wire grid polarizer.

13. The backlight unit of claim 12, wherein the light reflected from the wire grid polarizer is reflected again from the third electrode to change into oval polarized light.

14. A liquid crystal display LCD comprising an LCD panel (200) and a backlight unit (100) according to any one of the preceding claims, wherein the wire grid polarizer is on a surface of the substrate that faces the LCD panel or is on a surface of the substrate that faces the first substrate.

15. The liquid crystal display of claim 14, further comprising a diffusion sheet (190) arranged to scatter light emitted from the backlight unit.
